**Europäisches Patentamt**

**European Patent Office**

**Office européen des brevets**

(19)

(11) Publication number: **0 120 562**
**A2**

(12)

# EUROPEAN PATENT APPLICATION

(21) Application number: **84300497.9**

(22) Date of filing: **26.01.84**

(51) Int. Cl.³: **C 08 L 23/16**
**C 08 L 23/10**
**//(C08L23/10, 23/16), (C08L23/16, 23/10)**

(30) Priority: **27.01.83 US 461510**

(43) Date of publication of application:
**03.10.84 Bulletin 84/40**

(84) Designated Contracting States:
**BE DE FR GB IT**

(71) Applicant: **Exxon Research and Engineering Company**
**P.O.Box 390 180 Park Avenue**
**Florham Park New Jersey 07932(US)**

(72) Inventor: **Hazelton, Donald Ross**
**89 Glenmere Drive**
**Chatham New Jersey(US)**

(74) Representative: **Dew, Melvyn John et al,**
**Esso Chemical Ltd. Esso Chemical Research Centre P.O. Box 1**
**Abingdon Oxfordshire, OX13 6BB(GB)**

(54) Elastomer, polypropylene blends for optically clear products.

(57) Composition blends consisting essentially of an ethylene propylene elastomer and polypropylene, particularly a random polypropylene reactor copolymer, are very effective for forming optically clear products, particularly films.

EP 0 120 562 A2

ELASTOMER, POLYPROPYLENE BLENDS FOR OPTICALLY CLEAR PRODUCTS

## FIELD OF THE INVENTION

This invention relates to blend compositions for optically clear products consisting essentially of an ethylene propylene elastomer and polypropylene, preferably a random reactor copolymer.

## PRIOR ART

Optically clear film products find particular utility in medical facilities, particularly where the clarity is important for monitoring fluid intake and detecting fluid contamination. Plastic vinyl materials have traditionally been utilized, but problems have been encountered because of serious adverse reactions from the plasticizers required because of their extractibility and suspected carcinogenicity.

The prior art has suggested numerous polyolefin blends, e.g., U.S. Patent 3,515,775 and 4,087,485 to give the desired film products. In general, these blends have been unable to replace the vinyl plastics because of difficult reproducibility, poor optical quality, or the need for calendering to provide clarity. A significant aspect of the clarity requirement is that that property survive autoclave sterilization.

## SUMMARY OF THE INVENTION

It has now been found that blends consisting essentially of an ethylene propylene elastomer, and polypropylene, preferably a random polypropylene reactor copolymer, provide films and other products which are both optically clear and flexible when rapidly quenched, thus overcoming the difficulties of the prior art in replacing the vinyl materials. It is surprising that these properties are obtained, since plastic blends without plasticizers require high elastomer content to achieve desired flexibility and introduction of an elastomer into a plastic blend produces poorer optical properties.

# DETAILED DESCRIPTION OF THE INVENTION

The elastomer is a non-crosslinked ethylene propylene elastomer having a Mooney viscosity, ML (1 + 8) @ 127°C in the range of about 10 to 40, preferably 15 to 25, and at least 50 weight percent ethylene, up to 85 percent, preferably about 60 to 80 percent, with the balance predominantly propylene. The term ethylene propylene elastomer is intended to generically connote ethylene proplyene copolymers (EPM) and ethylene propylene terpolymers (EPDM). Typical of the third monomers is a $C_5$-$C_{14}$ nonconjugated diolefin. Non-limited examples of such nonconjugated diolefins include the following:

A. Straight chain acyclic dienes such as: 1,4-hexadiene and 1,6-octadiene.

B. Branched acyclic dienes such as 5-methyl 1,4-hexadienes, 3,7-dimethyl 1,6-octadiene, 3,7-dimethyl 1,7-octadiene and mixed isomers of dihydromyrcene, and dihydroocimene.

C. Single ring alicyclic dienes such as 1,4-cyclohexadiene, 1,5-cyclooctadiene and 1,5-cyclododecadiene.

D. Multi-ring alicyclic fused and bridged ring diene such as: tetrahydroindene, methyl tetrahydroindene, alkenyl, alkylidene, cycloalkenyl and cycloalkylidene norbornenes such as 5-methylene-2-norbornene (MNB), 5-ethylidene-2-norbornene (ENB), 5-propenyl-2-norbornene, 5-isopropylidene-2-norbornene, 5-(4-cyclopentenyl)-2-norbornene, and 5-cyclohexylidene-2-norbornene.

Preferred is 5-ethylidene-2-norbornene (ENB).

These ethylene/higher alpha olefin copolymers and terpolymers may be prepared by any conventional manner and the preparation of same does not constitute part of the instant invention.

Blends useful in this invention employ polypropylene which can be a highly crystalline isotactic or syndiotactic polypropylene. Also, the polypropylene can be a copolymer, referred to as a random polypropylene reactor copolymer, containing minor amounts of an alphaolefin comonomer of 2 to 16 carbon atoms. The level of comonomer which can be utilized is about 1 to about 20 weight percent, preferably about 2 to about 18, most preferably about 2 to about 15; a preferred comonomer is ethylene. These are art-recognized materials, see, e.g., "Modern Plastics Encyclopedia 1981-1982," pages 532, 533. The random reactor copolymer is particularly preferred because it gives lower stiffness and better optical properties. Especially useful is the random copolymer containing about 3 percent ethylene and having a melt flow rate of 4.0 at 230°C (ASTM D1238 condition L).

The elastomer is employed in the blend in an amount of about 1 to 80 weight percent, and the polypropylene in an amount of about 20 to 99 weight percent.

In addition to the active components, various ingredients can be incorporated into the composition in order to achieve various cost and/or performance objectives in specific end-use applications. For example, one can use such materials as process aids (e.g., stearic acid), lubricants (e.g., oleamide, oil), antiblocking aids, antioxidants, foaming agents and non-extractible low MW polyethylene or oxidized polyethylene waxes as slip agents. Polypropylene and reactor copolymer can be blended as one phase to optimize cost or performance properties (e.g., flexibility, softening temperature, etc.).

Preparation of compositions of this invention, i.e., the blend of polyolefin plastics and elastomer as described above, can be achieved in several different ways. The polyolefin plastics and elastomer are brought into intimate contact by, for example, dry blending these materials and then passing the overall composition through a compounding extruder. Alternatively, the polyolefin plastics and elastomer can be fed directly to a mixing device such as a compounding extruder, high shear continuous mixer, two roll mill, an internal mixer such as a Banbury, etc. The optional ingredients previously described can be added to the composition during this mixing operation. It is also possible to achieve melt mixing in an extruder section of a film line or in an injection or extrusion blow molding machine. Overall, the objective is to obtain a uniform dispersion of all ingredients and this is readily achieved by inducing sufficient shear and heat to cause the plastics component(s) to melt. However, time and temperature of mixing should be controlled as is normally done by one skilled in the art so as to avoid molecular weight degradation or volatilization of any of the ingredients.

The blends of the invention can be used to produce films, filaments, rods, protective coatings, molded and extruded shaped articles, and the like, by procedures known in the art. These compositions are particularly useful for producing materials requiring clarity, such as blow-molded containers and the like, provided the melt is quenched quickly.

This invention and its advantages will be better understood from the following examples.

Example 1

Blends of various grades of EP elastomers and homo polypropylene were Banbury mixed and underwater pelletized as shown in Table 1. The pellets were then fed into a 1" 24/1 L/D 3 HP extruder and cast into film form on a chilled roll. Optical properties of each film were measured on a Garnder XL-211 Hazemeter. The characteristics of each grade of EP elastomer are described in the Table. The unmodified homo polypropylene was cast as a control film. As shown by the data, optical properties (haze and gloss) vary, depending on the particular grade of elastomer used. Lowest haze and highest film gloss were achieved with a 15 ML, 78% $C_2=$ EPDM. High haze was generally observed with high Mooney elastomer. An ethylene content of 43 percent resulted in a tacky film surface. Although the blends contain 60 percent elastomer, their optics surprisingly rival the performance of unmodified homo polypropylene and the resulting films are very flexible due to the high elastomer content.

## Example 2

Blends of some of the same elastomers from Example 1 were mixed with a random reactor copolymer polypropylene as shown in Table 2 and processed into film in the same manner. Comparing the data between Tables 1 and 2 indicates slightly better optics for the reactor copolymer vs. the homo polymer. Again, very good optics for EP-4 grade of EPDM are noted relative to the other grades tested, once again comparing favorably to the polyolefin itself, but at significantly reduced stiffness.

## Example 3

Pellets of EP-4 elastomer and a random reactor copolymer (same as Example 2) were dry blended and fed to an extruder and cast into film. Compositions evaluated as shown in Table 3 demonstrate that good optical properties were achievable with this grade of EPDM over a wide range of blend compositions without the benefit of high shear intensive mixing. The extruder used was a 1" Killion Model KL-100 24/1 L/D.

## Example 4

The blends shown in Table 4 were Banbury mixed and underwater pelletized into approximately 1/8-inch pellets. They were cast into film on a small laboratory extruder, producing the excellent optical properties shown. Bags were fabricated from the films using an impulse heat sealer and filled with approximately 800 g. water. The filled bags exhibited a soft feel and outstanding see-through clarity. The bags were successfully autoclaved without dimensional change at 250°F and retained a very high level of see-through clarity after sterilization.

## Example 5

The compositions of Example 4 were also successfully blow molded into a flexible container, filled with water, and steam sterilized. The containers exhibited good see-through clarity before and after autoclaving.

## TABLE 1

### Example 1

| Film | A | B | C | D | E | F |
|---|---|---|---|---|---|---|
| Homo PP (4.5 MFR) | 40 | 40 | 40 | 40 | 40 | 100 |
| EP-1 | 60 | - | - | - | - | - |
| EP-2 | - | 60 | - | - | - | - |
| EP-3 | - | - | 60 | - | - | - |
| EP-4 | - | - | - | 60 | - | - |
| EP-5 | - | - | - | - | 60 | - |
| A.O | 0.3 | 0.3 | 0.3 | 0.3 | 0.3 | - |
| Slip Agent | 0.2 | 0.2 | 0.2 | 0.2 | 0.2 | - |
| Gauge, mils | 7.0 | 7.1 | 8.0 | 5.1 | 5.0 | 4.9 |
| Haze, % | 84 | 63 | 17 | 9 | 33 | 18 |
| Gloss, 45°, % | 3 | 6 | - | 36 | 23 | - |
| Comment: | Non-Tacky Surface | Non-Tacky Surface | Tacky Surface | Non-Tacky Surface | Non-Tacky Surface | Non-Tacky Surface |

EP-1    :  50 ML (1 + 8) 127°C, 65% $C_2$=, Broad MWD EPDM
EP-2    :  55 ML (1 + 8) 127°C, 70% $C_2$=, Narrow MWD EPDM
EP-3    :  25 ML (1 + 8) 127°C, 43% $C_2$=, Narrow MWD EPDM
EP-4    :  15 ML (1 + 8) 127°C, 78% $C_2$=, Broad MWD EPDM
EP-5    :  50 ML (1 + 8) 127°C, 77% $C_2$=, Narrow MWD EPDM
A.O.    :  Irganox 1076
Slip Agent:  Armoslip EXP

## TABLE 2
### Example 2

| Film | G | H | I | J |
|---|---|---|---|---|
| PPRC (4 MFR, 3% C$_2$=content) | 40 | 40 | 40 | 100 |
| EP-2 | 60 | - | - | - |
| EP-4 | - | 60 | - | - |
| EP-5 | - | - | 60 | - |
| A.O. | 0.3 | 0.3 | 0.3 | - |
| Slip Agent | 0.2 | 0.2 | 0.2 | - |
| Gauge, mils | 6.0 | 5.9 | 5.9 | 4.9 |
| Haze, % | 56 | 8 | 27 | 10 |
| 1% Secant Modulus, psi-MD | 17,700 | 20,800 | 22,500 | 60,600 |

EP Description - See TABLE 1.

## TABLE 3
### Example 3

| Film | K | L | M | N | O |
|---|---|---|---|---|---|
| PPRC | 80 | 70 | 60 | 50 | 40 |
| EP-4 | 20 | 30 | 40 | 50 | 60 |
| Gauge, mils | 5.4 | 6.0 | 7.1 | 6.2 | 6.8 |
| Haze, % | 20 | 18 | 14 | 21 | 15 |
| Gloss, 45°, % | 28 | 33 | 38 | 34 | 46 |
| 1% Secant Modulus psi-MD | 42,300 | 39,400 | 33,300 | 24,000 | 22,700 |

## TABLE 4
### Example 4

| Film | P | Q |
|---|---|---|
| PPRC | 70 | 70 |
| EP-4 | 30 | - |
| EP-6 | - | 30 |
| A.O. | 0.3 | 0.3 |
| Oxidized PE Wax | 1.0 | 1.0 |
| Haze, % | 9 | 12 |

EP-4 :  15 ML (1 + 8) 127°C,  78% C$_2$=, Broad MWD EPDM

EP-6 :  23 ML (1 + 8) 127°C,  67% C$_2$=, Narrow MWD EPM

The advantages of this invention will be apparent to the skilled in the art. Blends are provided that can be processed in a broad variety of equipment to provide optically clear, impact resistant, tear resistant, durable products. The products have excellent low temperature properties, exhibit easy heat sealing, and are quite flexible. They may be sterilized by steam at 250°F without dimensional change and without appreciable loss of optical clarity.

It will be understood that this invention is not limited to the specific examples which are offered as particular embodiments, and that modifications can be made without departing from the spirit thereof.

CLAIMS

1.  A composition blend capable of being formed into optically clear products consisting essentially of:

    (A)  about 1 to 80 weight percent of an ethylene propylene elastomer having an ethylene content of at least 50 weight percent and a Mooney viscosity ML (1+8) at 127°C in the range of about 10 to 40; and

    (B)  about 20 to 99 weight percent of a polypropylene polymer selected from the group consisting of polypropylene and random polypropylene reactor copolymer.

2.  A blend according to claim 1, wherein the elastomer has an ethylene content of from 60 to 80 weight percent.

3.  A blend according to claim 1 or 2 wherein the elastomer has a Mooney viscosity of from 15 to 25.

4.  A blend according to claim 1, 2 or 3, wherein the polypropylene is a random reactor copolymer.

5.  A blend according to any of the preceding claims wherein the copolymer contains from 2 to 15 weight percent ethylene.

6.  A blend according to any of the preceding claims, wherein the copolymer contains about 3 percent ethylene, and has a melt flow rate of 4.0 at 230°C.

7.  A blend according to any of the preceding claims wherein the elastomer is ethylene, propylene, 5-ethylidine-2-norbornene.

0120562

8.  A blend according to any of the preceding claims
    which additionally includes an incidental ingredient
    selected from the group consisting of process aids,
    lubricants, antiblocking aids, antioxidants, foaming
    agents, slip agents and mixtures thereof.

9.  The use of a blend according to any of the preceding
    claims to form an optically clear product.

10. An optically clear product whenever produced from
    a blend according to any of the preceding claims.